# EUROPEAN PATENT APPLICATION

(11) **EP 4 510 729 A1**
(43) Date of publication of application: **19.02.2025**
(21) Application number: 22936871.7
(22) Date of filing: 13.04.2022
(51) Int. Cl.: H04W 72/04

(54) **INFORMATION CONFIGURATION METHOD AND APPARATUS, AND DEVICE AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Stöckeler, Ferdinand
(86) International application number: PCT/CN2022/086700
(87) International publication number: WO 2023/197221

(57) **Abstract**

The present application relates to the field of mobile communications. Disclosed are an information configuration method and apparatus, and a device and a storage medium. The method comprises: a terminal receiving configuration information, which is sent by a network device, wherein the configuration information comprises at least one piece of bandwidth part (BWP) information, each piece of BWP information among the at least one piece of BWP information is associated with an area identifier, and the at least one piece of BWP information is used for the terminal to send an uplink positioning reference signal when the terminal is in an RRC idle state and/or an RRC inactive state. In the solution provided in the embodiments of the present application, after moving to an area which is indicated by an area identifier, a terminal can still send an uplink positioning reference signal on the basis of configured BWP information, so as to facilitate a network device in performing positioning, thereby expanding the ways in which the terminal is positioned, and ensuring the positioning stability of the terminal.

## Description

### TECHNICAL FIELD

The present invention relates to the field of mobile communication, and in particular, to an information configuration method and apparatus, a device, and a storage medium.

### BACKGROUND

In mobile communication systems, terminals can send uplink positioning reference signals to network devices through configured BWP (Band Width Part), so that network devices can position based on the received uplink positioning reference signals. However, when the terminal is in RRC (Radio Resource Control) idle state or RRC inactive state, if it reselects to another cell during its movement, the terminal will release the configured BWP, causing the network device to be unable to position the terminal based on the uplink positioning reference signal sent by the terminal.

### SUMMARY

Embodiments of the present invention provide an information configuration method, apparatus, device, and storage medium. After a terminal moves to an area indicated by an area identifier, the terminal can still send an uplink positioning reference signal based on configured BWP information, for a network device to perform positioning, expanding the way of positioning the terminal and ensuring the stability of positioning the terminal. The technical solution is as follows.

According to an aspect of the present invention, an information configuration method is provided. The method is performed by a terminal, and includes:
receiving configuration information sent by a network device, wherein the configuration information includes at least one piece of bandwidth part (BWP) information;
wherein each piece of BWP information in the at least one piece of BWP information is associated with at least one area identifier, and the at least one piece of BWP information is configured for the terminal to send an uplink positioning reference signal in a radio resource control (RRC) idle state and/or RRC inactive state.

According to an aspect of the present invention, an information configuration method is provided. The method is performed by a network device, and includes:
sending configuration information to a terminal, wherein the configuration information includes at least one piece of BWP information;
wherein each piece of BWP information in the at least one piece of BWP information is associated with at least one area identifier, and the at least one piece of BWP information is configured for the terminal to send an uplink positioning reference signal in a radio resource control (RRC) idle state and/or RRC inactive state.

According to an aspect of the present invention, an information configuration apparatus is provided. The apparatus includes:
a receiving module, configured to receive configuration information sent by a network device, wherein the configuration information includes at least one piece of bandwidth part (BWP) information;
wherein each piece of BWP information in the at least one piece of BWP information is associated with at least one area identifier, and the at least one piece of BWP information is configured for the terminal to send an uplink positioning reference signal in a radio resource control (RRC) idle state and/or RRC inactive state.

According to an aspect of the present invention, an information configuration apparatus is provided. The apparatus includes:
a sending module, configured to send configuration information to a terminal, wherein the configuration information includes at least one piece of bandwidth part (BWP) information;
wherein each piece of BWP information in the at least one piece of BWP information is associated with at least one area identifier, and the at least one piece of BWP information is configured for the terminal to send an uplink positioning reference signal in a radio resource control (RRC) idle state and/or RRC inactive state.

According to an aspect of the present invention, a terminal is provided. The terminal includes a processor, a transceiver coupled to the processor, and a memory configured to instructions executable by the processor. The processor is configured to load and execute the executable instructions to implement the information configuration method described in the above aspect.

According to an aspect of the present invention, a network device is provided. The network device includes a processor, a transceiver coupled to the processor, and a memory configured to instructions executable by the processor. The processor is configured to load and execute the executable instructions to implement the information configuration method described in the above aspect.

According to an aspect of the present invention, a computer readable storage medium is provided. The computer readable storage medium has stored therein executable program codes that, when loaded and executed by a processor, cause the information configuration method described in the above aspects to be implemented.

According to an aspect of the present invention, a chip is provided. The chip includes programmable logic circuits and/or program instructions, configured to implement the information configuration method described in the above aspects when the chip is running on a terminal or a network device.

According to an aspect of the present invention, a computer program product is provided, which is configured to implement the information configuration method described in the above aspects when the computer program product is executed by a processor of a terminal or network device.

In the information configuration scheme provided in the embodiments of the present invention, the terminal receives at least one piece of BWP information, and at least one piece of BWP information is associated with the area identifier. The BWP information is configured for the terminal to send the uplink positioning reference signal when it is in the RRC idle and/or inactive state. That is to say, after the terminal moves to the area indicated by the area identifier, the terminal can still send the uplink positioning reference signal based on the configured BWP information, facilitating the network device to perform positioning, expanding the way of positioning the terminal, and ensuring the stability of positioning the terminal.

### BRIEF DESCRIPTION OF THE DRAWINGS

In order to provide a clearer explanation of the technical solution in embodiments of the present invention, a brief introduction will be given below to the accompanying drawings required in the description of the embodiments. It is obvious that the accompanying drawings are only some of the disclosed embodiments. For those skilled in the art, other accompanying drawings can be obtained based on these drawings without creative labor.
Fig. 1 is a block diagram of a communication system provided in an exemplary embodiment of the present invention;
Fig. 2 is a flowchart of an information configuration method provided in an exemplary embodiment of the present invention;
Fig. 3 is a flowchart of another information configuration method provided in an exemplary embodiment of the present invention;
Fig. 4 is a flowchart of a positioning method provided in an exemplary embodiment of the present invention;
Fig. 5 is a block diagram of an information configuration apparatus provided in an exemplary embodiment of the present invention;
Fig. 6 is a block diagram of another information configuration apparatus provided in an exemplary embodiment of the present invention;
Fig. 7 is a block diagram of an information configuration apparatus provided in an exemplary embodiment of the present invention;
Fig. 8 is a block diagram of another information configuration apparatus provided in an exemplary embodiment of the present invention; and
Fig. 9 is a schematic diagram of a structure of a communication device provided in an exemplary embodiment of the present invention.

### DETAILED DESCRIPTION

In order to clarify the purpose, technical solution, and advantages of the present invention, a further detailed description of embodiments of the present invention will be provided below in conjunction with the accompanying drawings.

The exemplary embodiments will be described in detail here, with examples shown in the accompanying drawings. When referring to the accompanying drawings, unless otherwise indicated, the same numbers in different drawings represent the same or similar elements. The implementations described in the following exemplary embodiments do not represent all implementations consistent with the present invention. On the contrary, they are only examples of devices and methods consistent with some aspects of the present invention as described in the accompanying claims.

The terms used in present invention are for the purpose of describing specific embodiments only, and are not intended to limit present invention. The singular forms of "a", "an", and "this" used in present invention and the appended claims are also intended to include the majority form, unless the context clearly indicates otherwise. It should also be understood that the term "and/or" used in this article refers to and includes any or all possible combinations of one or more associated listed items.

It should be understood that although the terms first, second, third, etc. may be used in present invention to describe various information, these terms should not be limited to them. These terms are only used to distinguish information of the same type from each other. For example, without departing from the scope of present invention, the first information may also be referred to as the second information, and similarly, the second information may also be referred to as the first information. Depending on the context, for example, the word `if' used here can be interpreted as `when' or 'upon' or `in response to determining'.

It should be noted that the information (including but not limited to user equipment information, user personal information, etc.), data (including but not limited to data used for analysis, stored data, displayed data, etc.), and signals involved in present invention are all authorized by the user or fully authorized by all parties, and the collection, use, and processing of relevant data must comply with relevant laws, regulations, and standards of relevant countries and regions.

In the following, the application scenarios of the present invention will be described.

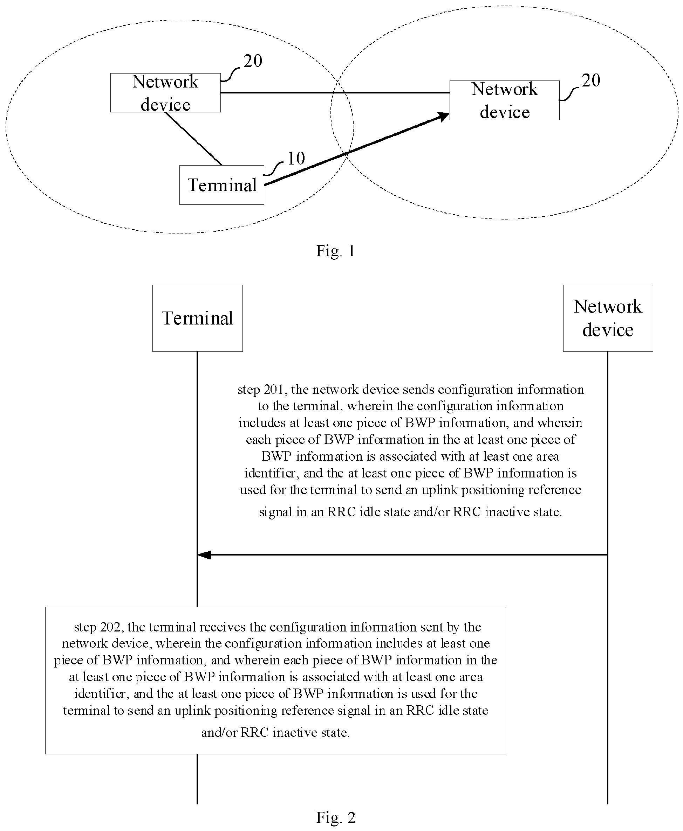

Fig. 1 shows a block diagram of a communication system provided in an exemplary embodiment of the present invention. The communication system may include a terminal 10 and a network device 20.

The number of terminals 10 is usually multiple, and each network device 20 can manage one or more terminals 10 distributed within the cell. The terminals 10 may include various handheld devices with wireless communication capabilities, in vehicle devices, wearable devices, computing devices, or other processing devices connected to wireless modems, as well as various forms of user equipment (UE), mobile stations (MS), and so on. For the convenience of description, in the embodiments of present invention, the devices mentioned above are collectively referred to as terminals.

The network device 20 is a device deployed in an access network to provide wireless communication functionality for the terminal 10. For the convenience of description, in the embodiments of the present invention, the devices that provide wireless communication function for terminals 10 are collectively referred to as network devices. The network device 20 and terminal 10 can establish a connection through an air interface for communication, including signaling and data exchange. There may be multiple network devices 20, and communication between two adjacent network devices 20 can also be conducted through wired or wireless means. The terminal 10 can switch between different network devices 20, that is, establish connections with different network devices 20.

The network device 20 may include various forms of macro base stations, micro base stations, relay stations, access points, and so on. In systems using different wireless access technologies, the names of devices with network device functions may vary, such as gNodeB or gNB in 5G NR (New Radio) systems. With the evolution of communication technology, the name `network device' may change.

Fig. 2 shows a flowchart of an information configuration method provided in an exemplary embodiment of the present invention, which can be applied to the terminal and network device as shown in Fig. 1. The method includes at least some of the following contents.

In step 201, the network device sends configuration information to the terminal, wherein the configuration information includes at least one piece of BWP information, and wherein each piece of BWP information in the at least one piece of BWP information is associated with at least one area identifier, and the at least one piece of BWP information is configured for the terminal to send an uplink positioning reference signal in an RRC idle state and/or RRC inactive state.

In step 202, the terminal receives the configuration information sent by the network device, wherein the configuration information includes at least one piece of BWP information, and wherein each piece of BWP information in the at least one piece of BWP information is associated with at least one area identifier, and the at least one piece of BWP information is configured for the terminal to send an uplink positioning reference signal in an RRC idle state and/or RRC inactive state.

In embodiments of the present invention, the terminal itself has RRC idle state, RRC inactive state, and RRC connected state. When the terminal is in RRC idle state or RRC inactive state, if it needs to send an uplink positioning reference signal to the network device, the network device needs to first configure BWP information for the terminal, and then the uplink positioning reference signal is sent based on the BWP information.

The network device sends configuration information to the terminal, and at least one piece of BWP information can be configured for the terminal through this configuration information. Each piece of BWP information is associated with an area identifier, which indicates the area corresponding to the BWP information. Then, the terminal determines the BWP information configured for the terminal by the network device and the area corresponding to the BWP information.

In some embodiments, the area identifier indicates at least one cell, and the area identifier is the identifier corresponding to BWP information. That is to say, if the terminal is located in at least one cell indicated by the area identifier, the BWP information corresponding to the area identifier is valid. However, if the terminal is not located in at least one cell indicated by the area identifier, the BWP information corresponding to the area identifier is invalid.

For example, the area identifier associated with BWP information indicates cell 1 and cell 2. If the terminal is located in cell 1 and BWP information is associated with cell 1, the BWP information becomes effective and the terminal can use the BWP information. However, if the terminal is located in cell 3 and cell 3 is outside of cells 1 and 2, then cell 3 is not associated with BWP information and the BWP information is invalid, and the terminal cannot use the BWP information.

In some embodiments, after the terminal sends the uplink positioning reference signal to the network device, the network device can position the terminal based on the received uplink positioning reference signal.

In some embodiments, the BWP information includes at least one of the followings.

### (1) SCS (Sub Carrier Spacing)

The subcarrier spacing refers to the interval between adjacent subcarriers, for example, the subcarrier spacing is 15 KHz (kilohertz), 30 KHz, or other numerical values.

### (2) CP (Cyclic Prefix)

The cyclic prefix is a cyclic structure formed by copying a segment of data after a data symbol to the front of the symbol, which ensures that OFDM (Orthogonal Frequency Division Multiplexing) signals with time delay always have integer multiples of the FFT (Fast Fourier Transform) integration period.

### (3) frequency domain position of BWP

The frequency domain position indicates the position of the BWP in the frequency domain.

### (4) bandwidth of BWP

The bandwidth of the BWP indicates the frequency range occupied by the BWP in the frequency domain.

In some embodiments, the configuration information is RRC release message, or the configuration information is RRC reconfiguration message.

It should be noted that steps executed by the network device can form a separate embodiment, and the steps executed by the terminal can also form a separate embodiment, which is not limited in present invention.

In the embodiments provided in present invention, the terminal receives at least one piece of BWP information, and at least one piece of BWP information is associated with the area identifier. The BWP information is used by the terminal to send the uplink positioning reference signal in RRC idle state and/or RRC inactive state. That is to say, after the terminal moves to the area indicated by the area identifier, the terminal can still send the uplink positioning reference signal based on the configured BWP information, for the network device to perform positioning, which expands the way of positioning the terminal and ensures the stability of positioning the terminal.

The present invention also provides a configuration method, wherein at least one piece of BWP information is obtained by the network device from the LMF or Xn interface, and the BWP is configured for the terminal (UE) to send the uplink positioning reference signal.

In some embodiments, the at least one piece of BWP information is obtained by the network device from the LMF (Location Management Function) through NRPPa (NR Positioning Protocol A), or the at least one piece of BWP information is obtained by the network device through the Xn interface (a type of communication interface).

For example, obtaining BWP information from LMF refers to the BWP information of neighboring cells obtained by the network device from LMF through NRPPa for transmitting the uplink positioning reference signal.

In embodiments of the present invention, LMF is a network element in the core network, which can obtain BWP information for sending the uplink positioning reference signal in neighboring cells. The network device communicates with LMF through NRPPa, so the network device can obtain BWP information for sending the uplink positioning reference signal from LMF through NRPPa.

In the following, we will explain how the network device can obtain BWP information from the LMF network element.

Optionally, the LMF network element sends BWP request information to the neighboring cell, which is used to obtain BWP information of the neighboring cell. The neighboring cell receives the BWP request information sent by the LMF network element, and in response to the BWP request information, sends the BWP information of the neighboring cell to the LMF. After receiving the BWP information sent by the neighboring cell, LMF carries the BWP information of the neighboring cell in the NRPPa message and sends the NRPPa message to the network device. The BWP information includes the cell identifier of the neighboring cell.

Optionally, the network device sends BWP request information to the LMF network element. After receiving the BWP request information, the LMF network element sends the BWP request information to the neighboring cell in response to the BWP request information. The BWP request information is used to obtain the BWP information of the neighboring cell. The neighboring cell receives the BWP request information sent by the LMF network element, and in response to the BWP request information, sends the BWP information of the neighboring cell to the LMF. After receiving the BWP information sent by the neighboring cell, LMF carries the BWP information of the neighboring cell in the NRPPa message and sends the NRPPa message to the network device. The BWP information includes the cell identifier of the neighboring cell.

In addition, obtaining the BWP information from the Xn interface refers to the BWP information of neighboring cells obtained by the network device through the Xn interface for sending the uplink positioning reference signal. That is to say, the network device can also obtain BWP information through other network devices, and network devices communicate with each other through the Xn interface. Therefore, the network device obtain BWP information for sending the uplink positioning reference signal from network devices in neighboring cells through the Xn interface.

In the following, we will explain how the network device can obtain BWP information from other network devices.

The network device is the network device of the serving cell and other network devices are the network devices of neighboring cells. The serving cell sends BWP request information to the neighboring cell through the Xn interface. After receiving the BWP request information, the neighboring cell returns the BWP information to the serving cell through the Xn interface in response to the BWP request information. The BWP information includes the cell identifier of the neighboring cell.

It should be noted that the serving cell in the embodiments of the present invention is a cell that configures BWP information for the terminal, and the neighboring cell is the neighboring cell of the terminal.

On the basis of the embodiment shown in Fig. 2, the association between BWP information and area identifier includes various types, and each type of association will be explained below.

First type: each area identifier is associated with one BWP.

The area identifier and BWP have a one-to-one correspondence, that is, one area identifier is associated with one BWP. It can also be understood that the BWP is valid within the area indicated by an associated area identifier.

For example, BWP1 is associated with area identifier 1, and BWP2 is associated with area identifier 2.

Second type: there is one BWP, and the BWP is associated with multiple area identifiers.

One BWP is associated with multiple area identifiers, meaning that the areas indicated by multiple area identifiers correspond to one BWP, which is valid within the areas indicated by multiple area identifiers.

For example, BWP1 is associated with area identifier 1 and area identifier 2, BWP2 is associated with area identifier 3, area identifier 4 and area identifier 5, and BWP3 is associated with area identifier 6 and area identifier 7.

Third type: there are multiple BWPs, and each BWP is associated with at least one area identifier.

At least one area identifier is associated with multiple BWPs, which means that there are multiple valid BWPs within the area indicated by the area identifier, and the terminal can use any of the multiple BWPs within the area indicated by the area identifier.

For example, BWP1 and BWP2 are associated with area identifier 1, and BWP3, BWP4 and BWP5 are associated with area identifier 2.

In the solution provided in the embodiments of the present invention, the BWP included in the configuration information has multiple associated relationships with the area identifier, that is, there are multiple ways to configure BWP for the terminal, which improves the diversity of BWP configuration methods, while ensuring that BWP and associated area identifiers are configured for the terminal.

It should be noted that this embodiment of the present invention is illustrated using area identifier as an example. In another embodiment, the area identifier can be represented by any of the following identification methods.

First type: the area identifier is a cell identifier.

In an embodiment of the present invention, the cell identifier indicates a cell, that is to say, the area identifier indicates a cell, and the BWP information is associated with the cell identifier.

In some embodiments, the cell identifier may also be a cell global identity.

For example, the cell identifier is represented using CGI (Cell Global ID).

In the following, taking the area identifier being the cell identifier as an example, the association between BWP information and the area identifier will be explained. That is to say, for each type of relationship between BWP information and the area identifier in the above embodiment, the area identifier can be replaced with the cell identifier.
(1) Each area identifier is associated with one BWP.

The cell identifier and BWP have a one-to-one correspondence, that is, one cell identifier is associated with one BWP. It can also be understood that the BWP is valid within the cell indicated by an associated cell identifier.

For example, BWP1 is associated with cell identifier 1, and BWP2 is associated with cell identifier 2.

(2) There is one BWP, and the BWP is associated with multiple cell identifiers.

One BWP is associated with multiple cell identifiers, meaning that the cells indicated by multiple cell identifiers correspond to one BWP, which is valid within the cells indicated by multiple cell identifiers.

For example, BWP1 is associated with cell identifier 1 and cell identifier 2, BWP2 is associated with cell identifier 3, cell identifier 4 and cell identifier 5, and BWP3 is associated with cell identifier 6 and cell identifier 7.

(3) There are multiple BWPs, and each BWP is associated with at least one cell identifier.

At least one cell identifier is associated with multiple BWPs, which means that there are multiple valid BWPs within the cell indicated by the cell identifier, and the terminal can use any of the multiple BWPs within the cell indicated by the cell identifier.

For example, BWP1 and BWP2 are associated with cell identifier 1, and BWP3, BWP4 and BWP5 are associated with cell identifier 2.

Second type: the area identifier is an RAN (Radio Access Network) area identifier.

The RAN area identifier indicates the RAN area, and the RAN area includes at least one cell, which means that the RAN area indicated by the RAN area identifier includes one or more cells, and one or more cells share the BWP information associated with the RAN area identifier.

In some embodiments, the RAN area identifier is represented using RAN area code.

In the following, taking the area identifier being the RAN area identifier as an example, the association relationship between BWP information and the area identifier is explained. That is to say, for each type of relationship between BWP information and the area identifier in the above embodiment, the area identifier can be replaced with the RAN area identifier.
(1) Each RAN area identifier is associated with one BWP.

The RAN area identifier and BWP have a one-to-one correspondence, that is, one RAN area identifier is associated with one BWP. It can also be understood that the BWP is valid within the RAN area indicated by an associated RAN area identifier.

For example, BWP1 is associated with RAN area identifier 1, and BWP2 is associated with RAN area identifier 2.

(2) There is one BWP, and the BWP is associated with multiple RAN area identifiers.

One BWP is associated with multiple RAN area identifiers, meaning that the RAN areas indicated by multiple RAN area identifiers correspond to one BWP, which is valid within the RAN areas indicated by multiple RAN area identifiers.

For example, BWP1 is associated with RAN area identifier 1 and RAN area identifier 2, BWP2 is associated with RAN area identifier 3, RAN area identifier 4 and RAN area identifier 5, and BWP3 is associated with RAN area identifier 6 and RAN area identifier 7.

(3) There are multiple BWPs, and each BWP is associated with at least one RAN area identifier.

At least one RAN area identifier is associated with multiple BWPs, which means that there are multiple valid BWPs within the RAN area indicated by the RAN area identifier, and the terminal can use any of the multiple BWPs within the RAN area indicated by the RAN area identifier.

For example, BWP1 and BWP2 are associated with RAN area identifier 1, and BWP3, BWP4 and BWP5 are associated with RAN area identifier 2.

Third type: the area identifier is a system information area identifier.

The system information area identifier indicates the system information area, and the system information area includes at least one cell, which means that the system information area indicated by the system information area identifier includes one or more cells, and one or more cells share the BWP information associated with the system information area identifier.

In some embodiments, the system information area identifier is represented using systemInformatinoAreaID.

In the following, taking the area identifier being the system information area identifier as an example, the association relationship between BWP information and the area identifier is explained. That is to say, for each type of relationship between BWP information and the area identifier in the above embodiment, the area identifier can be replaced with the system information area identifier.
(1) Each system information area identifier is associated with one BWP.

The system information area identifier and BWP have a one-to-one correspondence, that is, one system information area identifier is associated with one BWP. It can also be understood that the BWP is valid within the system information area indicated by an associated system information area identifier.

For example, BWP1 is associated with system information area identifier 1, and BWP2 is associated with system information area identifier 2.

(2) There is one BWP, and the BWP is associated with multiple system information area identifiers.

One BWP is associated with multiple system information area identifiers, meaning that the system information areas indicated by multiple system information area identifiers correspond to one BWP, which is valid within the system information areas indicated by multiple system information area identifiers.

For example, BWP1 is associated with system information area identifier 1 and system information area identifier 2, BWP2 is associated with system information area identifier 3, system information area identifier 4 and system information area identifier 5, and BWP3 is associated with system information area identifier 6 and system information area identifier 7.

(3) There are multiple BWPs, and each BWP is associated with at least one system information area identifier.

At least one system information area identifier is associated with multiple BWPs, which means that there are multiple valid BWPs within the system information area indicated by the system information area identifier, and the terminal can use any of the multiple BWPs within the system information area indicated by the system information area identifier.

For example, BWP1 and BWP2 are associated with system information area identifier 1, and BWP3, BWP4 and BWP5 are associated with system information area identifier 2.

It should be noted that the embodiments of present invention are illustrated using any one of the cell identifier, RAN area identifier, or system information area identifier as an example. In another embodiment, the area identifier may also be a newly defined identifier, without the need to indicate the area identifier through the identifier in the above embodiments.

In the solution provided by the embodiments of the present invention, the area identifier can be represented by different types of identifier, that is, different types of identifier are used to indicate the area corresponding to BWP information, which expands the representation of area identifier and ensures the accuracy of indicating the area associated with BWP information.

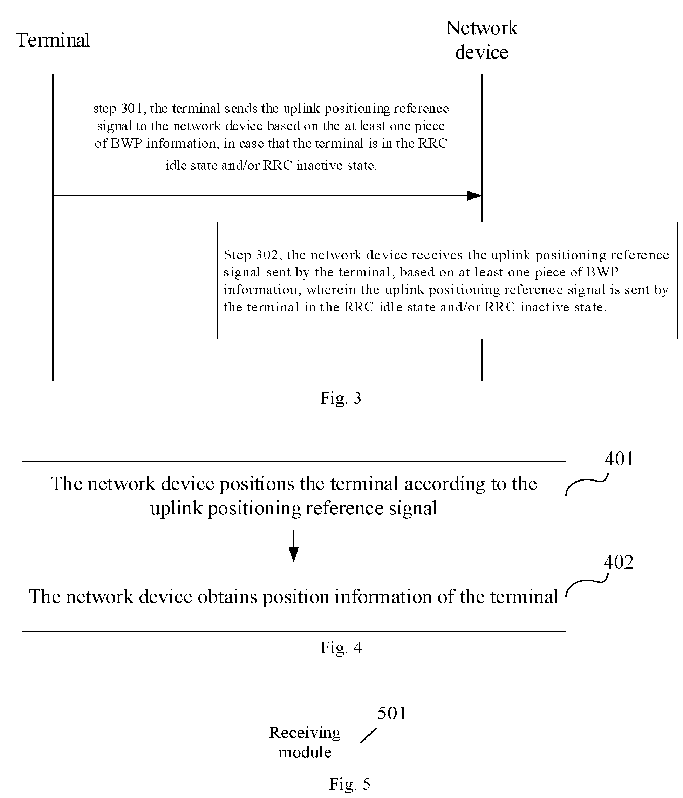

On the basis of the embodiment shown in Fig. 2, after the network device configures BWP information for the terminal, the terminal can send an uplink positioning reference signal based on the configured BWP information. Referring to Fig. 3, the method includes followings.

In step 301, the terminal sends the uplink positioning reference signal to the network device based on the at least one piece of BWP information, in case that the terminal is in the RRC idle state and/or RRC inactive state.

In an embodiment of the present invention, if the terminal is in the RRC idle state and/or RRC inactive state, the terminal can send the uplink reference signal to the network device based on at least one piece of BWP information configured by the network device.

In some embodiments, each piece of BWP information in at least one piece of BWP information is associated with an area identifier, and then the terminal can send the uplink reference signal to the network device based on at least one piece of BWP information and at least one area identifier associated with each piece of BWP information.

Sending the uplink positioning reference signal to the network device based on the at least one piece of BWP information, in case that the terminal is in the RRC idle state and/or RRC inactive state, includes at least one of following schemes.

In some embodiments, the uplink positioning reference signal is sent according to the BWP information corresponding to the area identifier, in case that the terminal is in the RRC idle state and/or RRC inactive state, and the area where the terminal is located is associated with the BWP information.

In an embodiment of the present invention, if the terminal is in the RRC idle state and/or RRC inactive state, and the area where the terminal is located is within the area indicated by the area identifier configured by the network device, it indicates the BWP information associated with the area where the terminal is located, and then the uplink positioning reference signal is sent based on the BWP information corresponding to the area identifier to which the area where the terminal is located belongs.

After the terminal determines the area identifier corresponding to the area where it is located, it can determine the BWP information associated with the area identifier, and then determine the BWP based on the BWP information. The terminal can then send the uplink positioning reference signal on the determined BWP.

For example, each piece of BWP information configured by the network device is associated with an area identifier, which is a cell identifier. The network device configures BWP information 1, BWP information 2, and BWP information 3 for the terminal, in which BWP information 1 is associated with cell identifier 1, which indicates cell 1, BWP information 2 is associated with cell identifier 2, which indicates cell 2, BWP information 3 is associated with cell identifier 3, which indicates cell 3. If the area where the terminal is located belongs to the coverage area of cell 2, it means that cell identifier 2 corresponding to cell 2 is associated with BWP information 2, and the terminal can send the uplink positioning reference signal to the network device based on BWP information 2.

For another example, each piece of BWP information configured by the network device is associated with multiple area identifiers, and the area identifier is a cell identifier. The network device configures BWP information 1 and BWP information 2 for the terminal. BWP information 1 is associated with cell identifier 1 and cell identifier 2, where cell identifier 1 indicates cell 1, cell identifier 2 indicates cell 2, and BWP information 2 is associated with cell identifier 3, cell identifier 4, and cell identifier 5, where cell identifier 3 indicates cell 3, cell identifier 4 indicates cell 4, and cell identifier 5 indicates cell 5. If the terminal is located in a coverage area of cell 2, it means that cell identifier 2 corresponding to cell 2 is associated with BWP information 2, and the terminal can send the uplink positioning reference signal to the network device based on BWP information 2.

For another example, each piece of BWP information configured by the network device is associated with multiple area identifiers, and the area identifier is a RAN area identifier. The network device configures BWP information 1 and BWP information 2 for the terminal. BWP information 1 is associated with RAN area identifier 1 and RAN area identifier 2, where RAN area identifier 1 indicates cell 1 and cell 2, RAN area identifier 2 indicates cell 3, cell 4, and cell 5, and BWP information 2 is associated with RAN area identifier 3, RAN area identifier 4 and RAN area identifier 5, where RAN area identifier 3 indicates cells 6 and 7, RAN area identifier 4 indicates cells 8, 9, and 10, and RAN area identifier 5 indicates cells 11 and 12. If the terminal is located in a coverage area of cell 7, it indicates that RAN area identifier 3 corresponding to cell 7 is associated with BWP information 2, and the terminal can send the uplink positioning reference signal to the network device based on BWP information 2.

It should be noted that the embodiments of the present invention illustrate the association relationship by way of example, and the present invention is not limited to the above examples. The network device can also configure other association relationships for the terminal.

In other embodiments, the uplink positioning reference signal is sent based on an initial BWP, in case that the terminal is in the RRC idle state and/or RRC inactive state, and the area where the terminal is located is not associated with BWP information.

The initial BWP is the BWP configured by the network device for the terminal through system message broadcasting, or the initial BWP is the BWP agreed upon by the protocol between the network device and the terminal, or the initial BWP may also be the BWP configured in other ways, which is not limited in embodiments of the present invention.

In embodiments of the present invention, if the terminal is in RRC idle state and/or RRC inactive state, and there is no associated BWP information in the area where the terminal is located, it indicates that the terminal cannot use the BWP information configured by the network device to send the uplink positioning reference signal. However, the network device has provided the terminal with initial BWP information. Therefore, for the terminal, it can send the uplink positioning reference signal based on the initial BWP.

After the terminal determines that it is not located in the area corresponding to the area identifier configured by the network device, it can determine the initial BWP, and then the terminal can send the uplink positioning reference signal on the determined initial BWP.

For example, each piece of BWP information configured by the network device is associated with an area identifier, which is a cell identifier. The network device configures BWP information 1, BWP information 2, and BWP information 3 for the terminal. BWP information 1 is associated with cell identifier 1, which indicates cell 1, BWP information 2 is associated with cell identifier 2, which indicates cell 2, and BWP information 3 is associated with cell identifier 3, which indicates cell 3. If the area where the terminal is located does not belong to the coverage area of any of cell 1, cell 2, or cell 3, it means that the area where the terminal is located is not associated with BWP information, and the terminal can send the uplink positioning reference signal to the network device based on the initial BWP.

For another example, each piece of BWP information configured by the network device is associated with multiple area identifiers, and the area identifier is a cell identifier. The network device configures BWP information 1 and BWP information 2 for the terminal. BWP information 1 is associated with cell identifier 1 and cell identifier 2, where cell identifier 1 indicates cell 1, and cell identifier 2 indicates cell 2, and BWP information 2 is associated with cell identifier 3, cell identifier 4, and cell identifier 5, where cell identifier 3 indicates cell 3, cell identifier 4 indicates cell 4, and cell identifier 5 indicates cell 5. If the area where the terminal is located does not belong to the coverage area of any of cells 1, 2, 3, 4, or 5, then it indicates that the area where the terminal is located is not associated with BWP information, and the terminal can send the uplink positioning reference signal to the network device based on the initial BWP.

For another example, each piece of BWP information configured by the network device is associated with multiple area identifiers, and the area identifier is a RAN area identifier. The network device configures BWP information 1 and BWP information 2 for the terminal. BWP information 1 is associated with RAN area identifier 1 and RAN area identifier 2, where RAN area identifier 1 indicates cell 1 and cell 2, and RAN area identifier 2 indicates cell 3, cell 4, and cell 5, and BWP information 2 is associated with RAN area identifier 3, RAN area identifier 4 and RAN area identifier 5, where RAN area identifier 3 indicates cell 6 and cell 7, RAN area identifier 4 indicates cell 8, cell 9, and cell 10, and RAN area identifier 5 indicates cell 11 and cell 12. If the area where the terminal is located does not belong to any of the coverage areas of cell 1, cell 2, cell 3, cell 4, cell 5, cell 6, cell 7, cell 8, cell 9, cell 10, cell 11, and cell 12, it indicates that the area where the terminal is located is not associated with BWP information, and the terminal can send the uplink positioning reference signal to the network device based on the initial BWP.

It should be noted that the embodiments of the present invention illustrate the association relationship by way of example, and the present invention is not limited to the above examples. The network device can also configure other association relationships for the terminal.

It should be noted that the embodiments of the present invention are illustrated using the example of sending the uplink positioning reference signal based on initial BWP. In another embodiment, the terminal does not send an uplink positioning reference signal, but releases at least one piece of BWP information configured by the network device.

The terminal is in the RRC idle state and/or RRC inactive state, the area where the terminal is located is not associated with BWP information, and the at least one piece of BWP information is released.

In an embodiment of the present invention, if the terminal is in RRC idle state and/or RRC inactive state, and there is no BWP information associated with the area where the terminal is located, it means that the terminal cannot use the BWP information already configured by the network device to send the uplink positioning reference signal. Therefore, for the terminal, it will no longer send uplink positioning reference signals and release at least one piece of BWP information already configured by the network device.

For example, each piece of BWP information configured by the network device is associated with an area identifier, which is a cell identifier. The network device configures BWP information 1, BWP information 2, and BWP information 3 for the terminal. BWP information 1 is associated with cell identifier 1, which indicates cell 1. BWP information 2 is associated with cell identifier 2, which indicates cell 2. BWP information 3 is associated with cell identifier 3, which indicates cell 3. If the area where the terminal is located does not belong to the coverage area of any of cell 1, cell 2, or cell 3, it means that the area where the terminal is located is not associated with BWP information. Then, the terminal releases at least one piece of BWP information that has been configured by the network device.

For another example, each piece of BWP information configured by the network device is associated with multiple area identifiers, and the area identifier is a cell identifier. The network device configures BWP information 1 and BWP information 2 for the terminal. BWP information 1 is associated with cell identifier 1 and cell identifier 2, where cell identifier 1 indicates cell 1, and cell identifier 2 indicates cell 2, and BWP information 2 is associated with cell identifier 3, cell identifier 4, and cell identifier 5, where cell identifier 3 indicates cell 3, cell identifier 4 indicates cell 4, and cell identifier 5 indicates cell 5. If the area where the terminal is located does not belong to the coverage area of any of cells 1, 2, 3, 4, or 5, then it indicates that the area where the terminal is located is not associated with BWP information, and the terminal releases at least one piece of BWP information that has been configured by the network device.

For another example, each piece of BWP information configured by the network device is associated with multiple area identifiers, and the area identifier is a RAN area identifier. The network device configures BWP information 1 and BWP information 2 for the terminal. BWP information 1 is associated with RAN area identifier 1 and RAN area identifier 2, where RAN area identifier 1 indicates cell 1 and cell 2, RAN area identifier 2 indicates cell 3, cell 4, and cell 5, and BWP information 2 is associated with RAN area identifier 3, RAN area identifier 4 and RAN area identifier 5, where RAN area identifier 3 indicates cell 6 and cell 7, RAN area identifier 4 indicates cell 8, cell 9, and cell 10, and RAN area identifier 5 indicates cell 11 and cell 12. If the area where the terminal is located does not belong to any of the coverage areas of cell 1, cell 2, cell 3, cell 4, cell 5, cell 6, cell 7, cell 8, cell 9, cell 10, cell 11, and cell 12, it indicates that the area where the terminal is located is not associated with BWP information, and the terminal releases at least one piece of BWP information configured by the network device.

It should be noted that the embodiments of the present invention are only illustrated using the example of the terminal releasing at least one piece of BWP information that has already been configured by the network device. In another embodiment, the network device also configures an uplink positioning reference signal configuration for the terminal. If the terminal determines not to send an uplink positioning reference signal, the terminal not only releases at least one piece of BWP information already configured by the network device, but also releases the configured uplink positioning reference signal configuration.

In some embodiments, if the terminal needs to determine whether the area where it is located is associated with BWP information, the terminal can determine whether the area where it is located is associated with BWP information based on the area identifier associated with each piece of BWP information.

In an embodiment of the present invention, after receiving at least one piece of BWP information configured by the network device, the terminal can determine the area associated with BWP information based on the area identifier associated with each piece of BWP information. The terminal can also determine the area where it is located. Therefore, when the terminal determines that its area is within the area indicated by the area identifier, it indicates that the area where it is located is associated with BWP information, and when the terminal determines that its area is not within the area indicated by the area identifier, it indicates that the area where it is located is not associated with BWP information.

In step 302, the network device receives the uplink positioning reference signal sent by the terminal, based on at least one piece of BWP information, wherein the uplink positioning reference signal is sent by the terminal in the RRC idle state and/or RRC inactive state.

In an embodiment of the present invention, the network device configures at least one piece of BWP information for the terminal, and the configured at least one piece of BWP information is used to send the uplink positioning reference signal when the terminal is in RRC idle state and/or RRC inactive state. Therefore, for the network device, it can receive the uplink positioning reference signal sent by the terminal based on at least one piece of BWP information.

In the solution provided by the embodiments of the present invention, when the terminal is in RRC idle state and/or RRC inactive state, it sends the uplink positioning reference signal to the network device based on at least one piece of BWP information. That is to say, after the terminal moves to the area indicated by the area identifier, it can still send the uplink positioning reference signal based on the configured BWP information, for the network device to perform positioning, expanding the way of positioning the terminal and ensuring the stability of positioning the terminal.

On the basis of the embodiment shown in Fig. 3, after receiving the uplink positioning reference signal sent by the terminal, the network device also needs to perform positioning based on the uplink positioning reference signal. Referring to Fig. 4, the method includes the followings.

In step 401, the network device positions the terminal according to the uplink positioning reference signal.

In an embodiment of the present invention, the network device configures BWP information for the terminal to send the uplink positioning reference signal. After the terminal sends the uplink positioning reference signal, the network device can position the terminal based on the received uplink positioning reference signal.

In step 402, the network device obtains position information of the terminal.

In an embodiment of the present invention, after the network device positions the terminal, it can obtain the position of the terminal and determine the position information of the terminal.

In some embodiments, the network device positions the terminal using UL TDOA (Uplink Time Difference of Arrival) positioning technology.

In an embodiment of the present invention, the network device configures multiple TRPs, and each TRP can receive the uplink positioning reference signal sent by the terminal. For each TRP, the UL RTOA (Uplink Relative Time of Arrival) is determined based on the time when each TRP receives the uplink positioning reference signal and the reference time of the TRP. The network device determines the position information of the terminal based on the obtained UL RTOA and the position information of each TRP in the multiple TRPs.

Optionally, time synchronization is made between multiple TRPs configured by network devices, so as to eliminate interference caused by time asynchrony between multiple TRPs when determining position information of the terminal based on UL RTOA, thereby improving the accuracy of the determined position information of the terminal.

In the solution provided in the embodiments of the present invention, when the terminal is in RRC idle state and/or RRC inactive state, it sends the uplink positioning reference signal to the network device based on at least one piece of BWP information. That is to say, after the terminal moves to the area indicated by the area identifier, it can still send an uplink positioning reference signal based on the configured BWP information, for the network device to perform positioning, and then the network device obtains the position information of the terminal, expanding the way of positioning the terminal and ensuring the stability of positioning the terminal.

It should be noted that the above embodiments can be divided into new embodiments, or combined with other embodiments to form new embodiments, the combination of which is not limited in the present invention.

Fig. 5 shows a block diagram of an information configuration apparatus provided in an exemplary embodiment of the present invention. Referring to Fig. 5, the apparatus includes a receiving module 501.

The receiving module 501 is configured to receive configuration information sent by a network device, wherein the configuration information includes at least one piece of BWP information.

Each piece of BWP information in the at least one piece of BWP information is associated with at least one area identifier, and the at least one piece of BWP information is configured for the terminal to send an uplink positioning reference signal in a radio resource control (RRC) idle state and/or RRC inactive state.

In some embodiments, each piece of BWP information being associated with at least one area identifier includes at least one of:
each area identifier being associated with one BWP;
there being one BWP, and the BWP being associated with a plurality of area identifiers; or
there being a plurality of BWPs, and each BWP being associated with at least one area identifier.

In some embodiments, the area identifier is a cell identifier; or
the area identifier is a radio access network (RAN) area identifier; or
the area identifier is a system information area identifier.

In some embodiments, the BWP information includes at least one of:
a SCS;
a CP;
a frequency domain position of a BWP; or
a bandwidth of a BWP.

In some embodiments, the configuration information is an RRC release message, or the configuration information is an RRC reconfiguration message.

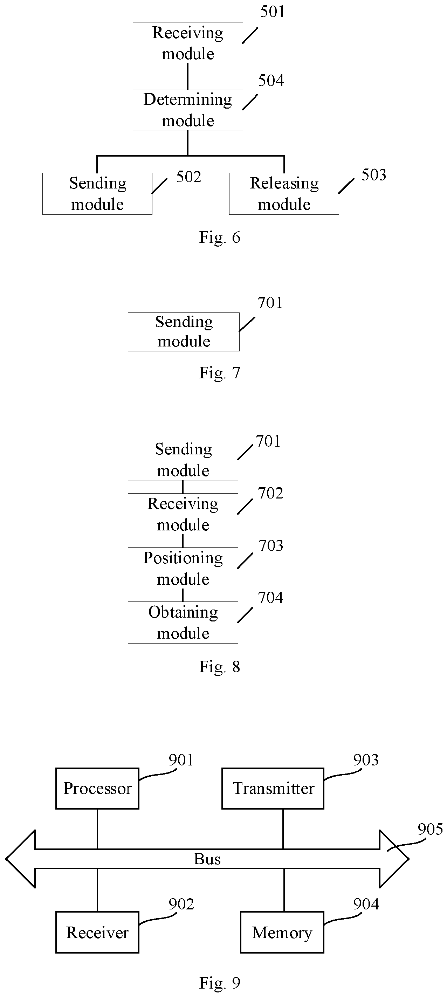

In some embodiments, referring to Fig. 6, the apparatus further includes a sending module 502.

The sending module 502 is configured to send the uplink positioning reference signal to the network device based on the at least one piece of BWP information, in case that the terminal is in the RRC idle state and/or RRC inactive state.

In some embodiments, the sending module 502 is further configured to send the uplink positioning reference signal according to the BWP information corresponding to the area identifier, in case that the terminal is in the RRC idle state and/or RRC inactive state, and an area where the terminal is located is associated with the BWP information.

In some embodiments, the sending module 502 is further configured to send the uplink positioning reference signal based on an initial BWP, in case that the terminal is in the RRC idle state and/or RRC inactive state, and an area where the terminal is located is not associated with BWP information.

In some embodiments, referring to Fig. 6, the apparatus further includes a releasing module 503.

The releasing module 503 is configured to release the at least one piece of BWP information, in case that the terminal is in the RRC idle state and/or RRC inactive state, and an area where the terminal is located is not associated with BWP information.

In some embodiments, referring to Fig. 6, the apparatus further includes a determining module 504.

The determining module 504 is configured to determine whether the area where the terminal is located is associated with the BWP information according to the area identifier associated with each piece of BWP information.

It should be noted that the apparatuses provided in the above embodiments only provides examples of the division of the above functional modules when implementing its functions. In practical applications, the above functions can be assigned to different functional modules as needed, that is, the internal structure of the apparatus can be divided into different functional modules to complete all or part of the functions described above. In addition, the apparatus and method embodiments provided in the above embodiments belong to the same concept, and the specific implementation process is detailed in the method embodiments, which will not be repeated here.

Fig. 7 shows a block diagram of another information configuration apparatus provided in an embodiment of the present invention. Referring to Fig. 7, the apparatus includes a sending module 701.

The sending module 701 is configured to send configuration information to a terminal, wherein the configuration information includes at least one piece of BWP information;

wherein each piece of BWP information in the at least one piece of BWP information is associated with at least one area identifier, and the at least one piece of BWP information is configured for the terminal to send an uplink positioning reference signal in a radio resource control (RRC) idle state and/or RRC inactive state.

In some embodiments, each piece of BWP information being associated with at least one area identifier includes at least one of:
each area identifier being associated with one BWP;
there being one BWP, and the BWP being associated with a plurality of area identifiers; or
there being a plurality of BWPs, and each BWP being associated with at least one area identifier.

In some embodiments, the area identifier is a cell identifier; or
the area identifier is a radio access network (RAN) area identifier; or
the area identifier is a system information area identifier.

In some embodiments, the BWP information includes at least one of:
a SCS;
a CP;
a frequency domain position of a BWP; or
a bandwidth of a BWP.

In some embodiments, the configuration information is an RRC release message, or the configuration information is an RRC reconfiguration message.

In some embodiments, the at least one piece of BWP information is obtained by the network device from LMF through NRPPa, or the at least one piece of BWP information is obtained by the network device via an Xn interface.

In some embodiments, referring to Fig. 8, the apparatus further includes a receiving module 702.

The receiving module 702 is configured to receive the uplink positioning reference signal sent by the terminal, based on the at least one piece of BWP information, wherein the uplink positioning reference signal is sent by the terminal in the RRC idle state and/or RRC inactive state.

In some embodiments, the receiving module 702 is further configured to receive the uplink positioning reference signal sent by the terminal, according to the BWP information corresponding to the area identifier, wherein the uplink positioning reference signal is sent by the terminal in case that the terminal is in the RRC idle state and/or RRC inactive state, and the terminal is located in an area indicated by the area identifier.

In some embodiments, the receiving module 702 is further configured to receive the uplink positioning reference signal sent by the terminal, based on an initial BWP, wherein the uplink positioning reference signal is sent in case that the terminal is in the RRC idle state and/or RRC inactive state, and the terminal is not located in an area indicated by the area identifier.

In some embodiments, referring to Fig. 8, the apparatus further includes a positioning module 703 and an obtaining module 704.

The positioning module 703 is configured to position the terminal based on the uplink positioning reference signal.

The obtaining module 704 is configured to obtain position information of the terminal.

It should be noted that the apparatuses provided in the above embodiments only provides examples of the division of the above functional modules when implementing its functions. In practical applications, the above functions can be assigned to different functional modules as needed, that is, the internal structure of the apparatus can be divided into different functional modules to complete all or part of the functions described above. In addition, the apparatus and method embodiments provided in the above embodiments belong to the same concept, and the specific implementation process is detailed in the method embodiments, which will not be repeated here.

Fig. 9 shows a schematic diagram of a structure of a communication device provided in an exemplary embodiment of the present invention. The communication device includes a processor 901, a receiver 902, a transmitter 903, a memory 904 and a bus 905.

The processor 901 includes one or more processing cores, and the processor 901 executes various functional applications and information processing by running software programs and modules.

The receiver 902 and the transmitter 903 can be implemented as a communication component, which may be a communication chip.

The memory 904 is coupled with the processor 901 through the bus 905.

The memory 904 can be used to store at least one program code, and the processor 901 is used to execute the at least one program code to implement the various steps in the above method embodiments.

In addition, the communication device can be a terminal or a network device. The memory 1004 can be implemented by any type of volatile or non-volatile storage device or combination thereof, including but not limited to: magnetic or optical disks, electrically erasable programmable read-only memory (EEPROM), erasable programmable read-only memory (EPROM), static ready to access memory (SRAM), read-only memory (ROM), magnetic memory, flash memory, programmable read-only memory (PROM).

In an exemplary embodiment, a computer readable storage medium is also provided. The computer readable storage medium has stored therein executable program codes that, when loaded and executed by a processor, cause the information configuration method provided by the various method embodiments for execution by the communication device to be implemented.

In an exemplary embodiment, a chip is provided that includes programmable logic circuits and/or program instructions for implementing information configuration methods as provided in various method embodiments when the chip is run on a terminal or network device.

In an exemplary embodiment, a computer program product is provided, which, when executed by a processor of a terminal or network device, is configured to implement the information configuration methods provided by the various method embodiments described above.

Ordinary technical personnel in this field can understand that all or part of the steps to implement the above embodiments can be completed by hardware, or by instructing relevant hardware through programs. The programs can be stored in a computer readable storage medium, such as read-only memory, magnetic disk, or optical disk.

The above are only optional embodiments of the present application and are not intended to limit the present application. Any modifications, equivalent substitutions, improvements, etc. made within the spirit and principles of the present application shall be included in the scope of protection of the present application.

## Claims

1. An information configuration method, performed by a terminal, comprising:
receiving configuration information sent by a network device, wherein the configuration information comprises at least one piece of bandwidth part (BWP) information;
wherein each piece of BWP information in the at least one piece of BWP information is associated with at least one area identifier, and the at least one piece of BWP information is configured for the terminal to send an uplink positioning reference signal in a radio resource control (RRC) idle state and/or RRC inactive state.

2. The method of claim 1, wherein each piece of BWP information being associated with at least one area identifier comprises at least one of:
each area identifier being associated with one BWP;
there being one BWP, and the BWP being associated with a plurality of area identifiers; or
there being a plurality of BWPs, and each BWP being associated with at least one area identifier.

3. The method of claim 1 or 2, wherein
the area identifier is a cell identifier; or
the area identifier is a radio access network (RAN) area identifier; or
the area identifier is a system information area identifier.

4. The method of any of claims 1-3, wherein the BWP information comprises at least one of:
a subcarrier spacing (SCS);
a cyclic prefix (CP);
a frequency domain position of a BWP; or
a bandwidth of a BWP.

5. The method of any of claims 1-4, wherein the configuration information is an RRC release message, or the configuration information is an RRC reconfiguration message.

6. The method of any of claims 1-5, further comprising:
in case that the terminal is in the RRC idle state and/or RRC inactive state, sending the uplink positioning reference signal to the network device based on the at least one piece of BWP information.

7. The method of claim 6, wherein in case that the terminal is in the RRC idle state and/or RRC inactive state, sending the uplink positioning reference signal to the network device based on the at least one piece of BWP information, comprises:
in case that the terminal is in the RRC idle state and/or RRC inactive state, and an area where the terminal is located is associated with the BWP information, sending the uplink positioning reference signal according to the BWP information corresponding to the area identifier.

8. The method of claim 6, wherein in case that the terminal is in the RRC idle state and/or RRC inactive state, sending the uplink positioning reference signal to the network device based on the at least one piece of BWP information, comprises:
in case that the terminal is in the RRC idle state and/or RRC inactive state, and an area where the terminal is located is not associated with the BWP information, sending the uplink positioning reference signal based on an initial BWP.

9. The method of claim 6, further comprising:
in case that the terminal is in the RRC idle state and/or RRC inactive state, and an area where the terminal is located is not associated with the BWP information, releasing the at least one piece of BWP information.

10. The method of any of claims 7-9, further comprising:
determining whether the area where the terminal is located is associated with the BWP information according to the area identifier associated with each piece of BWP information.

11. An information configuration method, performed by a network device, comprising:
sending configuration information to a terminal, wherein the configuration information comprises at least one piece of BWP information;
wherein each piece of BWP information in the at least one piece of BWP information is associated with at least one area identifier, and the at least one piece of BWP information is configured for the terminal to send an uplink positioning reference signal in a radio resource control (RRC) idle state and/or RRC inactive state.

12. The method of claim 11, wherein each piece of BWP information being associated with at least one area identifier comprises at least one of:
each area identifier being associated with one BWP;
there being one BWP, and the BWP being associated with a plurality of area identifiers; or
there being a plurality of BWPs, and each BWP being associated with at least one area identifier.

13. The method of claim 11 or 12, wherein
the area identifier is a cell identifier; or
the area identifier is a radio access network (RAN) area identifier; or
the area identifier is a system information area identifier.

14. The method of any of claims 11-13, wherein the BWP information comprises at least one of:
a subcarrier spacing (SCS);
a cyclic prefix (CP);
a frequency domain position of a BWP; or
a bandwidth of a BWP.

15. The method of any of claims 11-14, wherein the configuration information is an RRC release message, or the configuration information is an RRC reconfiguration message.

16. The method of any of claims 11-15, wherein the at least one piece of BWP information is obtained by the network device from a location management function (LMF) through a new radio positioning protocol A (NRPPa), or the at least one piece of BWP information is obtained by the network device via an Xn interface.

17. The method of any of claims 11-16, further comprising:
receiving the uplink positioning reference signal sent by the terminal based on the at least one piece of BWP information, wherein the uplink positioning reference signal is sent by the terminal in the RRC idle state and/or RRC inactive state.

18. The method of claim 17, wherein receiving the uplink positioning reference signal sent by the terminal based on the at least one piece of BWP information, comprises:
receiving the uplink positioning reference signal sent by the terminal according to the BWP information corresponding to the area identifier, wherein the uplink positioning reference signal is sent by the terminal in case that the terminal is in the RRC idle state and/or RRC inactive state, and the terminal is located in an area indicated by the area identifier.

19. The method of claim 17, wherein receiving the uplink positioning reference signal sent by the terminal based on the at least one piece of BWP information, comprises:
receiving the uplink positioning reference signal sent by the terminal based on an initial BWP, wherein the uplink positioning reference signal is sent by the terminal in case that the terminal is in the RRC idle state and/or RRC inactive state, and the terminal is not located in an area indicated by the area identifier.

20. The method of any of claims 17-19, further comprising:
positioning the terminal according to the uplink positioning reference signal; and
obtaining position information of the terminal.

21. An information configuration apparatus, comprising:
a receiving module, configured to receive configuration information sent by a network device, wherein the configuration information comprises at least one piece of bandwidth part (BWP) information;
wherein each piece of BWP information in the at least one piece of BWP information is associated with at least one area identifier, and the at least one piece of BWP information is configured for the terminal to send an uplink positioning reference signal in a radio resource control (RRC) idle state and/or RRC inactive state.

22. An information configuration apparatus, comprising:
a sending module, configured to send configuration information to a terminal, wherein the configuration information comprises at least one piece of bandwidth part (BWP) information;
wherein each piece of BWP information in the at least one piece of BWP information is associated with at least one area identifier, and the at least one piece of BWP information is configured for the terminal to send an uplink positioning reference signal in a radio resource control (RRC) idle state and/or RRC inactive state.

23. A terminal, comprising:
a processor; and
a transceiver coupled to the processor,
wherein the processor is configured to load and execute executable instructions to implement the information configuration method according to any of claims 1-10.

24. A network device, comprising:
a processor; and
a transceiver coupled to the processor,
wherein the processor is configured to load and execute executable instructions to implement the information configuration method according to any of claims 11-20.

25. A computer readable storage medium, having stored therein executable program codes that, when loaded and executed by a processor, cause the information configuration method according to any of claims 1-20 to be implemented.
